# EUROPÄISCHE PATENTSCHRIFT

(11) **EP 1 438 525 B1**
(45) Veröffentlichungstag und Bekanntmachung des Hinweises auf die Patenterteilung: **14.06.2006**
(21) Anmeldenummer: 02785277.1
(22) Anmeldetag: 23.10.2002
(51) Int. Cl.: F16H 61/02, B60W 10/10, F16H 61/70

(54) **SCHALTVERFAHREN FÜR MEHRGRUPPENGETRIEBE**
GEAR-SHIFTING METHOD FOR MULTI-GROUP GEARBOXES
PROCEDE DE COMMANDE DE BOITE DE VITESSES A PLUSIEURS GROUPES

(30) Priorität: 25.10.2001 DE 10152857
(43) Veröffentlichungstag der Anmeldung: 21.07.2004
(73) Patentinhaber: ZF FRIEDRICHSHAFEN Aktiengesellschaft, 88038 Friedrichshafen (DE)
(72) Erfinder: DÖBELE, Bernd, 88682 Salem (DE)
(86) Internationale Anmeldenummer: PCT/EP2002/011811
(87) Internationale Veröffentlichungsnummer: WO 2003/036137

(56) Entgegenhaltungen:
- EP-A- 1 035 357
- EP-A- 1 387 778
- DE-A- 10 029 497
- US-A- 6 105 449
- US-A- 6 123 643

## Beschreibung

Die vorliegende Erfindung betrifft ein Verfahren zum Schalten eines Mehrgruppengetriebes gemäß dem Oberbegriff des Patentanspruchs 1.

Getriebe für Nutzkraftfahrzeuge weisen häufig zwölf, sechzehn oder mehr Gänge auf. Derartige Vielganggetriebe sind meist als Mehrgruppengetriebe ausgestaltet, die sich in eine Vorschaltgruppe, eine Hauptgruppe und eine Bereichsgruppe aufteilen. Um den durch die Vielzahl der Gänge entstehenden komplexen Schaltablauf zu erleichtern, weisen die meisten dieser Getriebe eine automatisierte Schalteinrichtung auf. Dabei können die Schaltungen in der Vorschaltgruppe und in der Bereichsgruppe pneumatisch erfolgen, während die Schaltungen im Hauptgetriebe manuell vom Fahrzeugführer durchgeführt werden. Ferner sind in dem Schaltvorgang eine Vielzahl von Schaltelementen, die aufeinander abgestimmt werden müssen, und verschiedene Schutzmechanismen zum Schutz des Getriebes vor Fehlschaltungen vorgesehen. Dabei wird die Bereichsgruppe bei herkömmlichen Getriebemodellen in der Regel mit Hilfe von Schaltelementen, Sperrsynchronisierungen oder Lastschaltkupplungen synchronisiert geschalten.

Aus der Deutschen Patentanmeldung P 10029497 ist beispielsweise eine pneumatische Schalteinrichtung mit Schutzmechanismen gegen falsche Wählbewegungen bei der Gangwahl bekannt. Dort ist ein Getriebe mit einem mechanischen Interlock beschrieben, bei dem die Schaltschienen im Hauptgetriebe mechanisch über einen Sperrbolzen blockiert werden, wenn die Schaltschienen eines Gruppengetriebes nicht in einer ihrer beiden Endstellungen stehen. Dies geschieht über entsprechend gestaltete Schrägen auf der Schaltschiene des Gruppengetriebes. Diese Funktion soll sicherstellen, dass die Schaltung im Gruppengetriebe abgeschlossen ist, bevor die Hauptgetriebeschaltung und der damit verbundene Synchronisierungsvorgang erfolgt. Ferner ist dort eine pneumatisch-mechanische Gassensperre vorgesehen, die beispielsweise durch ein Signal der Abtriebswellendrehzahl aktiviert wird, um die Wählbewegung zum Schalten eines unzulässigen Ganges zu blockieren. Weiter ist zur Absicherung gegen versehentliches Umschalten des Gruppengetriebes eine Höckerraste zwischen den einzelnen Schaltgassen vorgesehen.

Derartige Schutzvorkehrungen und -mechanismen wirken sich jedoch nachteilig auf den Schaltkomfort aus. Es entstehen hohe Handschaltkräfte, störende Schaltgeräusche und eine wenig geschmeidige Schaltbewegung. Eine Höckerraste in den Schaltgassen wird vom Fahrer häufig als irritierend empfunden. Zudem steigen durch solche Sicherungsmaßnahmen die Gesamtkosten für das Getriebe.

Die einzelnen Gruppen des Mehrgruppengetriebes können zwar über eine externe Drehzahlführung problemlos in Folge geschalten werden. Jedoch führt ein derartiges Nacheinanderschalten der einzelnen Gruppen zu äußerst langen Schaltzeiten. In einem 16-Gang-Getriebe wird beispielsweise zum Schalten vom 8. Gang in den 9. Gang zunächst die Vorschaltgruppe unter Mitwirkung der Getriebebremse von der langsamen Getriebeübersetzung in die schnelle Übersetzung geschalten. Danach wird über die Betätigung einer Kupplung das Hauptgetriebe von der vierten Übersetzungsstufe in die erste Übersetzungsstufe und letztlich die Bereichsgruppe von der langsamen Übersetzung in die schnelle Übersetzung geschalten.

Der vorliegenden Erfindung liegt die Aufgabe zugrunde, ein Verfahren zum Schalten eines Mehrgruppengetriebes zu schaffen, das die Schaltzeiten verkürzt, die erforderliche Schaltkraft reduziert, Schaltgeräusche vermindert und den Schaltvorgang insgesamt vereinfacht.

Diese Aufgabe wird durch ein Schaltverfahren gemäß den kennzeichnenden Merkmalen des Anspruchs 1 gelöst. Weitere Varianten werden in den Unteransprüchen erläutert.

Dem Verfahren liegt ein automatisiertes Mehrgruppengetriebe zugrunde, das eine Vorschaltgruppe, eine Hauptgruppe und eine Bereichsgruppe umfasst. In diesem Getriebe ist bei dem Vorschaltgruppengetriebe und dem Bereichsgruppengetriebe eine erste Schaltstellung für eine langsame Gesamtgetriebeübersetzung, eine zweite Schaltstellung für eine schnelle Gesamtgetriebeübersetzung und eine dritte Schaltstellung als Neutralstellung zur Unterbrechung der Drehmomentübertragung vorgesehen. Bei einem Gangwechsel, der ein Schalten der Bereichsgruppe einschließt, wird gleichzeitig das Bereichsgruppengetriebe und das Vorschaltgruppengetriebe in ihre jeweilige Neutralschaltstellung gebracht. Dadurch wird zur Durchführung des Schaltvorgangs ein Abbremsen des Hauptgetriebes ermöglicht. Mit Beginn des Schaltvorgangs in diese Neutralstellungen setzt auch die Führung der Motordrehzahl auf die Gesamtübersetzung des Zielganges ein.

Dabei wird das Bereichsgruppengetriebe und das Hauptgetriebe vorzugsweise klauengeschaltet und das Vorschaltgetriebe synchronisiert geschaltet. Die Trennung der Primärseite des Hauptgetriebes am Getriebeeingang durch die neutrale Schaltstellung der Vorschaltgruppe und die gleichzeitige Trennung der Sekundärseite des Hauptgetriebes am Getriebeausgang durch die neutrale Schaltstellung der Bereichsgruppe erlauben ein Abbremsen des Hauptgetriebes für den Schaltvorgang. Das Bremsen des Hauptgetriebes, d. h. der Vorgelegewelle, der Losräder und der Hauptwelle, können dabei über eine auf die Vorgelegewelle wirkende Bremse erfolgen. Die Trennung des Hauptgetriebes vom Getriebeausgang kann im Falle eines Planetengetriebes auch durch eine Verschiebung des Zahneingriffs zwischen Sonnenrad und Planetenrädern erfolgen.

Unterhalb eines empirisch ermittelten Drehzahlniveaus an dem zu schaltenden Losrad eines zu schalten gewünschten Zielgangs im Hauptgetriebe ist dessen Einschaltung auch ohne Synchronisierungseinrichtung geräuschfrei. Dies ist auch dann der Fall, wenn das Hauptgetriebe über eine Klauenkupplung geschalten wird.

Nachdem das Hauptgetriebe in die Zielschaltstellung des zu schalten beabsichtigten Ganges gebracht ist, erfolgt das Schalten der Vorschaltgruppe in ihre entsprechende erforderliche Zielschaltstellung. Die Vorschaltgruppe wird dabei synchronisiert geschalten. Sobald dann die Gesamtübersetzung des Zielganges auf Gleichlauf gebracht ist, wird die Bereichsgruppe in die erforderliche Schaltstellung gebracht. Von einer Getriebeelektronik können z. B. die einzelnen Schaltpositionen überwacht und ausgewertet werden und es können die entsprechenden Verfahrensschritte eingeleitet werden.

Die Einstellung der Motordrehzahl auf die Gesamtübersetzung des Zielgangs startet mit Beginn des Schaltvorgangs, d. h. mit dem Schalten der Vorschaltgruppe und der Bereichsgruppe in ihre neutralen Schaltstellungen. Die Trennkupplung des Haupt- und Bereichsgetriebes kann dabei entweder geschlossen bleiben, während die Gruppen bereits über den Lastwechsel zur Schaltung ausspuren, oder geöffnet bleiben, bis die Gruppen ausgespurt sind und danach geschlossen werden.

Schaltvorgänge, an denen das Bereichsgruppengetriebe nicht beteiligt ist, d. h. bei denen die Schaltstellung der Bereichsgruppe vor und nach dem Schalten identisch ist, werden auf herkömmliche Weise durchgeführt. Sie können also als motor- und bremsengeführte Klauenschaltungen oder als synchronisierte Schaltungen erfolgen.

Mit dem erfindungsgemäßen Schaltverfahren ist ein geräuschfreies Schalten im Hauptgetriebe ohne einen Ausgleich der Differenzdrehzahl möglich, da das Schalten bei niedrigen Absolutdrehzahlen ausgeführt wird. Durch die Klauenschaltung der Bereichsgruppe ist hierfür keine Synchronisierung notwendig, wodurch sich die Kosten für das Gesamtgetriebe reduzieren. Ferner kann die Dimensionierung der Betätigungskräfte für das Hauptgetriebe und die Bereichsgruppe vereinheitlicht werden. Insgesamt wird der Schaltvorgang durch das Verfahren der vorliegenden Erfindung vereinfacht und die zum Schalten erforderliche Zeitspanne wird verkürzt.

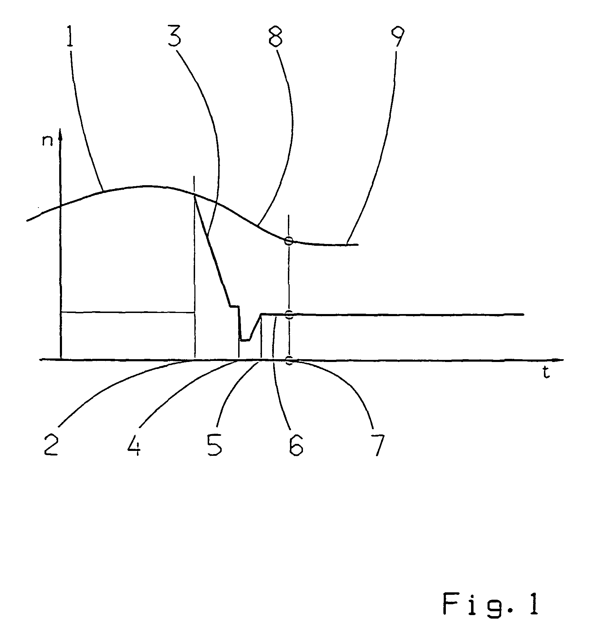

Im folgenden wird die Erfindung anhand der Zeichnung näher erläutert; in dieser ist der zeitliche Verlauf der Drehzahl bei einem Schaltverfahren nach der vorliegenden Erfindung aufgetragen.

Das Schaltverfahren wird an Hand des Umschaltens vom 8. Gang in den 10. Gang eines 16-Gang-Mehrgruppengetriebes geschildert. Im Kurvenverlauf 1 fährt das Getriebe im 8. Gang, wobei mit steigender Geschwindigkeit auch die Drehzahl steigt und ein Hochschalten erforderlich wird. Zum Zeitpunkt 2 beginnt der Schaltvorgang, d. h. die Vorschaltgruppe und die Bereichsgruppe nehmen ihre Neutralstellung ein, wobei das Hauptgetriebe abgebremst wird und die Führung der Motordrehzahl auf die Gesamtübersetzung des Zielganges beginnt, wie der Kurvenbereich 3 zeigt.

Zum Zeitpunkt 4 wird das Hauptgetriebe in die Zielschaltstellung gebracht und das Durchführen der Schaltung an eine Elektronik rückgemeldet. Daraufhin wird zum Zeitpunkt 5 die Vorschaltgruppe in ihre Zielschaltstellung geschalten und ein Gleichlauf mit der Gesamtübersetzung erreicht, wie im Kurvenabschnitt 6 gezeigt ist. Die Durchführung dieses Verfahrensschrittes wird ebenfalls an die Elektronik rückgemeldet. Zum Zeitpunkt 7 wird dann die Bereichsgruppe in ihre Zielschaltstellung gebracht.

Damit ist der Schaltvorgang abgeschlossen. Die Gesamtmotordrehzahl verhält sich während des Schaltvorgangs entsprechend dem im Kurvenbereich 8 gezeigten Verlauf. Nach Beendigung des Schaltens fährt das Fahrzeug im 10. Gang mit einer im Vergleich zum Kurvenabschnitt 1 niedrigeren Drehzahl, wie im Kurvenbereich 9 gezeigt ist.

Ein entsprechender Kurvenverlauf ergibt sich bei jedem Hochschalten, an dem die Bereichsgruppe beteiligt ist. Das Schalten in einen niedrigeren Gang erfolgt in analoger Weise. Dabei wird durch ein Absinken der Fahrgeschwindigkeit und der deshalb abfallenden Drehzahl ein Rückschalten erforderlich. Hierfür wird wiederum die Vorschaltgruppe und die Bereichsgruppe in ihre Neutralstellung gebracht. Anschließend wird die Motordrehzahl auf die Gesamtübersetzung des gewünschten niedrigeren Gangs und sodann das Hauptgetriebe in den entsprechenden Gang gebracht.

Nach Rückmeldung dieses Schaltvorgangs an die Elektronik, wird zunächst die Vorschaltgruppe und dann die Bereichsgruppe in die passende Zielschaltstellung gebracht.

Wie aus dieser Beschreibung ersichtlich, können mit dem Schaltverfahren problemlos eine oder mehrere Gangstufen übersprungen werden, ohne dass dabei die Gefahr einer Fehlschaltung entsteht.

### Bezugszeichen

- 1: Drehzahl 8. Gang
- 2: Schaltbeginn
- 3: Abbremsen Hauptgetriebe
- 4: Schalten Hauptgetriebe
- 5: Schalten Vorschaltgruppe
- 6: Gleichlauf
- 7: Schalten Bereichsgruppe
- 8: Drehzahl beim Schaltvorgang
- 9: Drehzahl 10. Gang

## Patentansprüche

1. Verfahren zum Schalten eines automatisierten Mehrgruppengetriebes, das eine Vorschaltgruppe, eine Hauptgruppe und eine Bereichsgruppe umfasst, wobei das Vorschaltgruppengetriebe und das Bereichsgruppengetriebe eine erste Schaltstellung für eine langsame Gesamtgetriebeübersetzung, eine zweite Schaltstellung für eine schnelle Gesamtgetriebeübersetzung und eine dritte Schaltstellung als Neutralstellung zur Unterbrechung der Drehmomentübertragung umfassen, **dadurch gekennzeichnet, dass** bei einem Gangwechsel, der ein Schalten der Bereichsgruppe einschließt, gleichzeitig das Bereichsgruppengetriebe und das Vorschaltgruppengetriebe in ihre jeweilige Neutralschaltstellung gebracht werden, wodurch zum Schalten ein Abbremsen des Hauptgetriebes ermöglicht wird und wobei mit Beginn des Schaltvorgangs in diese Neutralstellungen auch die Führung der Motordrehzahl auf die Gesamtübersetzung des Zielganges beginnt.

2. Verfahren zum Schalten eines Mehrgruppengetriebes nach Anspruch 1, **dadurch gekennzeich- net**, dass das Hauptgetriebe über eine auf eine Vorgelegewelle des Hauptgetriebes wirkende Bremse abgebremst wird.

3. Verfahren zum Schalten eines Mehrgruppengetriebes nach Anspruch 1 oder 2, **dadurch gekenn- zeichnet**, dass das Hauptgetriebe und das Bereichsgruppengetriebe klauengeschaltet und das Vorschaltgruppengetriebe synchronisiert geschalten wird.

4. Verfahren zum Schalten eines Mehrgruppengetriebes nach einem der Ansprüche 1 bis 3, **dadurch ge- kennzeichnet,** dass nach Schalten des Hauptgetriebes in eine Zielschaltstellung, die Vorschaltgruppe in ihre Zielschaltstellung geschalten wird.

5. Verfahren zum Schalten eines Mehrgruppengetriebes nach einem der vorhergehenden Ansprüche, **dadurch gekennzeichnet, dass** nach Schalten der Vorschaltgruppe in die Zielschaltstellung und nach Erreichen des Gleichlaufs mit der Gesamtübersetzung des Zielganges, die Bereichsgruppe in ihre Zielschaltstellung geschalten wird.

6. Verfahren zum Schalten eines Mehrgruppengetriebes nach einem der vorhergehenden Ansprüche, **dadurch gekennzeichnet, dass** eine Trennkupplung zum Schalten der Gänge beim Ausspuren der Getriebegruppen geschlossen bleibt.

7. Verfahren zum Schalten eines Mehrgruppengetriebes nach einem der vorhergehenden Ansprüche 1 bis 5, **da- durch gekennzeichnet**, dass die Trennkupplung beim Ausspuren der Getriebegruppen geöffnet bleibt und danach schließt.

## Claims

1. The invention relates to a method for shifting an automated multiple range-change transmission, which comprises a front-mounted unit, a main unit and a range unit, with the front-mounted unit and the range unit featuring a first shift position for a low overall transmission ratio, a second shift position for a high overall transmission ratio, and a third shift position as a neutral position for interruption of torque transmission, **characterized in that** a gear change, which includes shifting of the range unit, is accompanied with the simultaneous positioning of the range unit and of the front-mounted unit into their neutral positions, through which retardation of the main transmission for shifting is made possible, and that with the start of the shifting process into these neutral positions, adaptation of the engine speed to the overall ratio of the target gear is also started.

2. A method for shifting a multiple range-change transmission according to claim 1, **characterized in that** the main transmission is retarded by means of a brake acting on a countershaft of the main transmission.

3. A method for shifting a multiple range-change transmission according to claim 1 or 2, **characterized in that** the main transmission and the range unit are constant-mesh transmissions while the front-mounted unit is synchronized.

4. A method for shifting a multiple range-change transmission according to one of the claims 1 through 3, **characterized in that** after shifting of the main transmission into a target shifting position, the front-mounted unit is shifted into its target shifting position.

5. A method for shifting a multiple range-change transmission according to one of the preceding claims, **characterized in that** after shifting of the front-mounted unit into the target shifting position and after synchronization with the overall ratio of the target gear, the range unit is shifted into its target shifting position.

6. A method for shifting a multiple range-change transmission according to one of the preceding claims, **characterized in that** a separating clutch for shifting the gears remains closed during disengagement of the transmission groups.

7. A method for shifting a multiple range-change transmission according to one of the preceding claims 1 through 5, **characterized in that** the separating clutch remains open during disengagement of the transmission groups before it closes.

## Revendications

1. Méthode de commande d'une boîte de vitesses automatique à plusieurs groupes, comprenant un relais avant, un groupe principal et un groupe relais, sachant que le relais avant et le groupe relais comprennent une première position de commande pour une démultiplication totale faible, une deuxième position de commande pour une démultiplication totale importante et une troisième démultiplication totale en tant que position de point mort pour l'interruption de la transmission de couple, **caractérisée en ce que** lors d'un changement de rapport, celui-ci comprenant la commutation du groupe relais, le groupe relais et le relais avant sont amenés, en même temps, dans leurs positions de point mort respectives, permettant, lors d'un changement de rapport, de décélérer le groupe principal, et sachant qu'en initiant ce passage vers ces positions de point mort, commence également l'adaptation du régime moteur en fonction de la démultiplication totale du rapport cible.

2. Méthode de commande d'une boîte de vitesses à plusieurs groupes selon la revendication 1, **caractérisée en ce que** le groupe principal est décéléré par l'intermédiaire d'un frein agissant sur l'arbre intermédiaire.

3. Méthode de commande d'une boite de vitesses à plusieurs groupes selon les revendications 1 ou 2, **caractérisée en ce que** le groupe principal et le groupe relais sont à crabots et **en ce que** le relais avant est synchronisé.

4. Méthode de commande d'une boîte de vitesses à plusieurs groupes selon une des revendications 1 à 3, **caractérisée en ce que** après la commutation du groupe principal dans une position de commande cible, le relais avant est porté dans sa position de commande cible.

5. Méthode de commande d'une boîte de vitesses à plusieurs groupes selon une des revendications précédentes, **caractérisée en ce que** après la commutation du relais avant dans une position de commande cible et après avoir atteint la synchronisation par rapport à la démultiplication totale du rapport cible, le groupe relais est commuté dans sa position de commande cible.

6. Méthode de commande d'une boîte de vitesses à plusieurs groupes selon une des revendications précédentes, **caractérisée en ce que** un embrayage de coupure pour le changement des rapports est fermé lors du désenclenchement des groupes de la boîte de vitesses.

7. Méthode de commande d'une boîte de vitesses à plusieurs groupes selon une des revendications 1 à 5, **caractérisée en ce que** l'embrayage de coupure reste ouvert lors du désenclenchement des groupes de la boîte de vitesses et **en ce qu'**il se ferme après leur désenclenchement.
